# EUROPÄISCHE PATENTSCHRIFT

(11) **EP 2 603 833 B1**
(45) Veröffentlichungstag und Bekanntmachung des Hinweises auf die Patenterteilung: **16.12.2020**
(21) Anmeldenummer: 11758116.5
(22) Anmeldetag: 11.08.2011
(51) Int. Cl.: G03B 21/20, F21V 29/70, F21K 9/64, F21Y 115/10, F21V 9/20, F21V 13/08

(54) **LASERBASIERTE WEISSLICHTQUELLE**
LASER-BASED WHITE LIGHT SOURCE
SOURCE DE LUMIÈRE BLANCHE À BASE DE LASER

(30) Priorität: 11.08.2010 DE 102010034054
(43) Veröffentlichungstag der Anmeldung: 19.06.2013
(73) Patentinhaber: Schott AG, 55122 Mainz (DE)
(72) Erfinder: WOELFING, Bernd, 55122 Mainz (DE); HATZENBUEHLER, Andreas, 55599 Siefersheim (DE); MEINL, Jürgen, 65329 Hohenstein-Holzhausen (DE)
(74) Vertreter: Blumbach · Zinngrebe Patentanwälte PartG mbB
(86) Internationale Anmeldenummer: PCT/EP2011/004027
(87) Internationale Veröffentlichungsnummer: WO 2012/019767

(56) Entgegenhaltungen:
- EP-A1- 1 763 116
- EP-A1- 2 687 903
- JP-A- 2009 259 854
- US-A1- 2001 005 388
- US-A1- 2007 047 600
- US-A1- 2007 146 639
- VENUGOPAL RAO S ET AL: "Nonlinear frequency conversion in semiconductor optical waveguides using birefringent, modal and quasi-phase-matching techniques; Nonlinear frequency conversion in semiconductor optical waveguides using birefringent, modal and quasi-phase-matching techniques", JOURNAL OF OPTICS. A, PURE AND APPLIED OPTICS, INSTITUTE OF PHYSICS PUBLISHING, BRISTOL, GB, Bd. 6, Nr. 6, 1. Juni 2004 (2004-06-01), Seiten 569-584, XP020081467, ISSN: 1464-4258, DOI: 10.1088/1464-4258/6/6/013

## Beschreibung

Die Erfindung betrifft allgemein die Erzeugung von weißem Licht. Insbesondere betrifft die Erfindung die Erzeugung von weißlichem Licht mit geringem Etendue bzw. geringem Lichtleitwert aus Laserlichtquellen durch Spektralbereichskonversion.

Zahllose Anwendungen erfordern eine Weißlichtquelle als zentrales Beleuchtungselement. Speziell in der medizinischen Diagnostik, bei berührungslosen Messverfahren, der Weißlichtinterferometrie, der optischen Kohärenztomographie, in der Entfernungsmesstechnik aber auch als breitbandige Lichtquelle in der Grundlagenforschung werden derartige Lichtquellen benötigt.

Ebenso könnten im Automotivbereich oder beispielsweise in der Gebäudebeleuchtung Hochleistungsweißlichtquellen sinnvoll eingesetzt werden. Zusätzlich sei der Bereich der Videoprojektion genannt. Speziell hier ist starker Bedarf zu erwarten, da aufgrund der Einführung hochauflösender Videosysteme und Geräte zur dreidimensionalen Bilddarstellung die Nachfrage nach kompakten, effizienten und leistungsfähigen Weißlichtquellen weiter zunehmen wird. Unter zusätzlicher Verwendung von Lichtleitfasern bzw. Lichtleitfaserbündeln, sind zudem hochflexible und innovative Beleuchtungskonzepte für eine Vielzahl der Voranstehenden Anwendungsgebiete umsetzbar.

Zur Erzeugung von Weißlicht sind insbesondere thermische Lichtquellen bekannt. Obwohl mit diesen Lichtquellen sehr hohe Lichtströme erzeugt werden können, sind mit diesen Lichtquellen eine Vielzahl von Nachteilen verbunden.

Beispielsweise liegt nur ein kleiner Teil der so erzeugten Strahlung im sichtbaren Spektralbereich. Der größte Teil wird als Wärmestrahlung emittiert. Diese ungewollte Abwärme muss für die meisten Anwendungsgebiete aufwändig abgeführt werden. Sind diese Lichtquellen zudem häufigen An- und Ausschaltvorgängen ausgesetzt, reduziert sich deren Lebensdauer beträchtlich. Darüber hinaus sind die Lampen teuer und voluminös und verbrauchen aufgrund der geringen Effizienz sehr viel Energie.

Eine Alternative ist in der Verwendung von LED's oder anderer Halbleiterlichtquellen gegeben. Diese können zwar nicht direkt Weißlicht emittieren, doch bildet die Verwendung sogenannter Konversions- oder Leuchtstoffschichten einen Ausweg. Derartige Konversionsschichten bzw. -stoffe sind seit vielen Jahrzehnten bekannt und entsprechend hoch ist deren Verfügbarkeit bzw. Entwicklungsstand. Bei diesen Konversionsschichten wird das eingestrahlte Licht in Strahlung größerer Wellenlänge umgewandelt. Durch die Verwendung geeigneter Halbleiterlichtquellen können so verhältnismäßig leistungsstarke Weißlichtquellen durch bestrahlen und mischen verschiedener Konversionsstoffe, beispielsweise Rot, Grün und Blau, erzeugt werden.

In der US 2009/0262308 A1 ist eine derartige Vorrichtung zur Erzeugung von Weißlicht unter Verwendung von Konversionsschichten beschrieben. Das Anwendungsgebiet liegt im Bereich der Videoprojektion. Dabei wird Licht einer Lichtquelle die im blauen Spektralbereich emittiert, über eine Konversionsschicht in den grünen Spektralbereich konvertiert. Zusammen mit einer weiteren -ebenfalls im grünen emittierenden- sowie einer blauen und roten Lichtquelle, wird das für die Videoprojektion erforderliche Weißlicht durch Farbmischung erzeugt. Die einzelnen Lichtquellen werden dabei jeweils mittels eines Kondensors auf eine Lichthomogenisierungseinheit (light smoothing unit) geleitet. Nachteilig ist hierbei, dass sich die Etendue durch die Streuung im Konversionsmedium erhöht.

In der US 2009/0284148 A1 ist eine weitere Vorrichtung zur Erzeugung von Weißlicht unter Verwendung von Konversionsschichten beschrieben. Das Anwendungsgebiet liegt auch hier im Bereich der Videoprojektion. Dabei wird Licht mittels einer Lichtquelle die im blauen Spektralbereich emittiert auf eine segmentierte Scheibe gestrahlt. Auf dieser Scheibe befinden sich zumindest zwei Konversionsschichten. Eine konvertiert in den roten Spektralbereich die andere in den grünen Spektralbereich. Das blaue Licht braucht nicht konvertiert werden, es wird lediglich eine Streuscheibe eingesetzt (diffusion layer). Durch Rotation der Scheibe wird im schnellen Wechsel rotes grünes und blaues Konversions- bzw. Streulicht erzeugt. Nachteilig ist hierbei, dass zu keinem Zeitpunkt Weißlicht erzeugt wird, sondern erst durch die zeitliche Mittelung im Auge des Betrachters aufgrund der Trägheit des Auges.
Mehr noch wird das blaue Licht gestreut um es an die Emissionscharakteristik des roten und grünen Lichts anzupassen. Die Etendue der Lichtquelle wird also jeweils erhöht.

In der Patentschrift US 7 442 356 B2 ist ebenfalls eine Vorrichtung zur Erzeugung von konvertiertem Licht beschrieben. Dabei wird Licht von einer halbleiterbasierten Lichtquelle (Laser oder LED) über eine Faser einem Konversionsmedium zugeführt. Nachteilig ist hierbei, dass das aus der Faser austretende Licht annähernd parallel ist. Durch die Streuung im Konversionsmedium wird die Etendue damit deutlich erhöht.

Aus der JP 2010085740 A geht ein Projektor hervor, der eine Lichtquelle, ein Displayelement und ein optisches System aufweist, um Licht der Lichtquelle dem Displayelement zuzuführen. Die Lichtquelle enthält zwei oder mehrere Erregerlichtquellen mit unterschiedlichen Wellenlängen-Bändern sowie eine rotierende Platte mit Konverter-Bereichen zum Empfang von Erregerlicht an einer Fokusstelle des Konverters und Abgabe von Nutzlicht, das in einem kleinen Winkelbereich von einem Lichtleiter weitergeleitet wird.

Weiter beschriebt die US 2007/0146639 A1 eine Beleuchtungsquelle mit einer Anordnung von einer oder mehreren Leuchtdioden (LEDs), die Licht einer ersten Wellenlänge erzeugen können, mit Phosphormaterial, das in der Nähe der einen oder mehreren LEDs angeordnet ist, wobei das Phosphormaterial Licht einer zweiten Wellenlänge emittiert, wenn es durch das Licht der ersten Wellenlänge beleuchtet wird, mit einer Lichtsammeieinheit mit mindestens einem sich verjüngenden optischen Element, wobei Licht der ersten Wellenlänge und der zweiten Wellenlänge durch die Lichtsammeieinheit tritt, und mit einem reflektierenden Polarisator, der so angeordnet ist, dass er Licht der ersten und der zweiten Wellenlänge in einem ersten Polarisationszustand durchlässt und Licht der ersten und der zweiten Wellenlänge in einem zweiten Polarisationszustand senkrecht zum ersten Polarisationszustand reflektiert. Dabei wird von dem reflektierenden Polarisator reflektiertes Licht der ersten und der zweiten Wellenlänge unwesentlich aufgeweitet auf das Phosphormaterial zurückgeworfen und die Beleuchtungsquelle erzeugt einen Ausgangslichtstrahl, der polarisiertes Licht mit der ersten und der zweiten Wellenlänge enthält.

Obwohl so verhältnismäßig große Lichtströme mit annehmbarer Effizienz erzeugt werden können, ist der Etendue -auch Lichtleitwert genannt- derartiger Lichtquellen für die meisten Anwendungen inakzeptabel hoch. Neben dem Lichtstrom und der Effizienz stellt dieser Wert aber ein weiteres fundamentales Gütekriterium für Lichtquellen dar. Da in die Formel zur Berechnung des Etendue nur die Fläche des leuchtenden Areals und die numerische Apertur -also die Winkelverteilung der Strahlung- eingeht, ist dieser Wert für eine Lichtquelle mit vorgegebener Emissionscharakteristik eine Konstante. Dieser Wert kann durch nachfolgende optische Systeme im besten Fall erhalten werden.

Unter optischem System seien hier im folgenden alle Systeme verstanden, die Licht in seiner Ausbreitungsrichtung beeinflussen, also beispielsweise Linsen, Spiegel, diffraktive Elemente, Lichtleiter etc.. Mit anderen Worten kann das optische System höchstens seinen eigenen Etendue weiterleiten. Die Änderung der Etendue in einem optischen System entlang des optischen Pfades ist also ein Maß für die Fähigkeit, Licht geordnet von einem Punkt zu einem anderen zu transportieren. In der Regel sind optische Systeme jedoch fehlerbehaftet und vergrößern den Etendue.

Ist der Etendue des optischen Systems kleiner als der der Lichtquelle, geht Lichtenergie verloren. Dies hat auf einen Detektor, der auch eine Bildfläche, beispielsweise eine Leinwand sein kann, bzw. auf eine Faser oder ein Faserbündel nachteilige Folgen, da so nicht mehr die komplette zur Verfügung stehende Lichtenergie auf den Detektor bzw. die Faser bzw. das Faserbündel eingekoppelt werden kann. Speziell für eine Einkopplung in eine Faser oder ein Faserbündel, ist eine möglichst kleine Etendue zu erzielen. Umso kleiner dieser Wert ist, umso einfacher können optische System ausgeführt werden, ohne deren Effizienz bezüglich der Lichtweiterleitung negativ zu beeinflussen.

Durch Streuung im Konversionsmedium wird der Etendue jedoch vergrößert, da der Öffnungswinkel des konvertierten Lichts, wesentlich größer als der des eingestrahlten Lichtes ist, wodurch sich auch die Strahlqualität verschlechtert. Durch diese erhöhte Etendue, ist eine Abbildung des konvertierten Lichts auf kleine Flächen oder in kleine Winkel bzw. in eine möglichst günstige Kombination von beiden nicht oder nur noch eingeschränkt darstellbar. Der Etendue der Lichtquelle sollte also möglichst gering sein, um einen großen Teil der Strahlung von der Quelle zum Detektor führen zu können, ohne große Verluste hinnehmen zu müssen.

Der Erfindung liegt daher die Aufgabe zugrunde, eine Weißlichtquelle geringer Etendue bei gleichzeitig hohem Lichtstrom weißlichen Lichts zur Verfügung zu stellen. Diese Aufgabe wird durch den Gegenstand des unabhängigen Anspruchs gelöst. Vorteilhafte Ausgestaltungen sind in den jeweiligen abhängigen Ansprüchen angegeben.

Die Erfindung sieht demgemäß eine Einrichtung zur Weißlichterzeugung, umfassend zumindest eine monochromatische Lichtquelle sowie zumindest ein Konversionsmedium und eine dem Konversionsmedium in Lichtausbreitungsrichtung nachgeschaltete Optik vor, wobei die zumindest eine monochromatische Lichtquelle im blauen und/oder ultravioletten Spektralbereich emittiert und das Licht der zumindest einen monochromatischen Lichtquelle durch einen Laser erzeugt wird und das Licht der zumindest einen monochromatischen Lichtquelle durch ein optisches System auf das Konversionsmedium fokussiert wird und das Konversionsmedium dass eingestrahlte monochromatische Licht zumindest anteilig in einen anderen Spektralbereich konvertiert. Die nachgeschaltete Optik reduziert den Öffnungswinkel des vom Fokus ausgehenden konvertierten Lichts. Das optische System und die dem Konversionsmedium in Lichtausbreitungsrichtung nachgeschaltete Optik sind auf der gleichen Seite bezüglich des Konversionsmediums angeordnet und auf der gegenüberliegenden Seite des Konversionsmediums ist eine Reflexionseinrichtung angeordnet, welche das Licht der Lichtquelle und das im Konversionsmedium konvertierte Licht durch das Konversionsmedium hindurch zurückreflektiert. Die Einrichtung zur Weißlichterzeugung zeichnet sich dadurch aus, dass eine Linse einen fokussierenden Bestandteil sowohl des optischen Systems als auch der dem Konversionsmedium in Lichtausbreitungsrichtung nachgeschalteten Optik bildet und dass eine optische Achse der Linse als gemeinsames, fokussierendes optisches Element senkrecht zur der der Linse zugewandten Oberfläche des Konversionsmediums orientiert ist.

Unter einer Fokussierung wird dabei verstanden, dass der Fokus des Lichts im Konversionsmedium liegt. Da die Streuung im Konversionsmedium, bzw. die Konversion an sich zu einer ungerichteten Abstrahlung und damit zu einer Vergrößerung der Winkelverteilung führt, kann die Fokussierung vorteilhaft genutzt werden. Wird vor der Konversion die Strahlung fokussiert, kann die Winkelverteilung im Idealfall nicht mehr verschlechtert werden, da sie in erster Näherung unabhängig von der Winkelverteilung der eingestrahlten Strahlung ist. Die beleuchtete Fläche -und damit die Etendue- ist aber durch die Fokussierung kleiner geworden. Mit anderen Worten ist die Etendue das Produkt aus der Verteilung im Orts- und

Winkelraum. Die Konversion wirkt sich aber hauptsächlich auf den Winkelraum aus, da das Konversionsmedium typischerweise isotrop oder zumindest unter einem großen Raumwinkel abstrahlt. Durch die Fokussierung wird also der größte Anteil der Unordnung vor der Konversion in den Winkelraum verlagert. Dadurch können die negativen Auswirkungen minimiert werden.

Mittels der dem Konversionsmedium nachgeschalteten Optik kann dann der Öffnungswinkel des vom Fokus ausgehenden, konvertierten Lichts wieder reduziert werden. So kann gemäß der Erfindung der Öffnungswinkel auf die numerische Apertur eines Lichtleiters angepasst werden, welcher das konvertierte Licht weiterleitet.

Unter blauem und/oder ultraviolettem Spektralbereich der von der monochromatischen Lichtquelle emittierten Strahlung, wird dabei der Bereich verstanden, dessen Schwerpunkt bevorzugt unter 500nm, besonders bevorzugt unter 480 nm und ganz besonders bevorzugt unter 470 nm liegt.

Als Konversionsmedien kommen insbesondere Leuchtstoffe, beziehungsweise durch Fluoreszenz konvertierende Stoffe in Betracht. Insbesondere können auch verschiedene Leuchtstoffe miteinander kombiniert werden. Geeignet zumindest als Mischungsbestandteil sind beispielsweise auch die Leuchtstoffe, die auch für die Weißlicht-Erzeugung aus blauem Licht in Weißlicht-LED's eingesetzt werden.

In einer besonders bevorzugten Ausführungsform wird die monochromatische Lichtquelle durch zumindest einen Halbleiterlaser oder eine Laserdiode gebildet, da so sehr hohe Leistungsdichten erzeugbar sind und mehr Licht in kleineren Faserbündeln dargestellt werden kann.

Um die Intensitätsverteilung des Lasers über den Querschnitt, beziehungsweise dessen Strahlprofil zu homogenisieren ist es besonders vorteilhaft, wenn entlang des optischen Pfades vor dem Konversionsmedium ein Strahlformungselement vorgesehen wird, mit welchem das Intensitätsverteilung des Lichtstrahls der zumindest einen monochromatischen Lichtquelle geändert wird. Geeignete optische Elemente sind beispielsweise Strahlformer (engl. Beamshaper) oder diffraktive optische Elemente. Das optische Element ist zweckmäßigerweise dem Konversionsmedium vorgeordnet, beziehungsweise entlang des optischen Pfades zwischen der Lichtquelle und dem Konversionsmedium angeordnet. Durch die Änderung des Intensitätsprofils ist eine Anpassung auf nachgelagerte optische Elemente möglich. So kann die Anpassung des Intensitätsprofils so erfolgen, dass bei Einkopplung in ein Faserbündel jede Faser die gleiche Lichtenergie erhält.

In einer besonders bevorzugten Ausführungsform wird das optische System durch refraktive Elemente wie beispielsweise Linsen, reflektive Elemente wie beispielsweise Spiegel, diffraktive Elemente wie beispielsweise Fresnellinsen oder holographisch optische Elemente (HOE), oder eine Kombination dieser gebildet.

Weist das optische System eine numerische Apertur von bevorzugt größer als 0.3 oder besonders bevorzugt größer als 0.45 oder ganz besonders bevorzugt größer als 0.6 auf, wird das Licht auf einen entsprechend kleinen Brennfleck fokussiert. Besonders bevorzugt wird eine numerische Apertur von größer als 0.8. Entsprechend wird das Licht durch die Optik, beziehungsweise das optische System vorzugsweise mit einem großen Öffnungswinkel auf das Konversionsmedium fokussiert. Die Optik ist dabei vorzugsweise so ausgelegt, dass der Öffnungswinkel des auf das Konversionsmedium auftreffenden Lichts mindestens 35°, besonders bevorzugt mindestens 55°, insbesondere bevorzugt mindestens 70° beträgt. Bei einer numerischen Apertur von 0.8 beträgt der Öffnungswinkel mehr als 106°. Da so das Licht vor der Konversion schon über einen entsprechend breiten Winkelbreich verteilt ist, wirken sich die Konversion und die Streuung nicht so stark auf Strahlqualität auf, wie zum Beispiel bei Beleuchtung mit geringerer Numerischer Apertur oder gar kollimierten Licht. In einer besonders bevorzugten Ausführungsform liegt das konvertierte Licht im gelben Spektralbereich mit einem Schwerpunkt im Bereich von 550 nm und 620 nm mit einer Halbwertsbreite von bevorzugt größer als 50 nm, besonders bevorzugt größer als 100 nm und ganz besonders bevorzugt größer als 150 nm, so dass durch Mischung mit dem blauen, direkt durchgelassenen Licht der monochromatischen Lichtquelle weißliches Licht entsteht.

Es ist besonders vorteilhaft, wenn das Konversionsmedium drehbar gelagert ist, beispielsweise entlang seiner Längsachse, es sind aber auch andere Möglichkeiten denkbar, beispielsweise eine oszillierende Lagerung. Dadurch kann eine Degradation des Phosphors als Konversionsmedium durch die starke Fokussierung vermieden bzw. erheblich verzögert werden, da die Leistung und die entstehende Wärme auf eine größere Fläche verteilt wird.

Normalerweise nimmt bei steigender Temperatur die Zahl der strahlungslosen Übergänge zu. Durch die Bewegung wird die Leistungsdichte im Phosphor reduziert. Da die Phosphormaterialien meist in thermisch schlecht leitende Matrizen (beispielsweise Silikone, Epoxite oder Gläser) eingelagert sind, ist dies eine wichtige Maßnahme um die Kühlung zu ermöglichen.

Gemäß einer vorteilhaften Weiterbildung der Erfindung ist somit eine Einrichtung zur Bewegung des Konversionsmediums relativ zum Lichtstrahl der Lichtquelle vorgesehen.

Eine weitere vorteilhafte Möglichkeit ist, eine Kühlung mit gut wärmeleitenden Materialien zu bewirken. Es gibt dazu die Möglichkeit, das Konversionsmedium, wie insbesondere ein oder mehrere Phosphore in Optikkeramiken einzubetten. Bevorzugt werden dabei Optikkeramiken mit einer Wärmeleitfähigkeit von mindestens 5 W/mK, beispielsweise eine Optokeramik mit ca. 10 W/mK Wärmeleitfähigkeit verwendet. Zum Vergleich haben organische Träger Wärmeleitfähigkeiten von typischerweise kleiner 1W/mK. Bei Gläsern betragen die Wärmeleitfähigkeiten typischerweise um 1W/mK. Wird ein hoch wärmeleitfähiges Trägermaterial, wie vorzugsweise die Optokeramik verwendet, kann auch ein nicht bewegtes Konversionselement ausreichend gekühlt werden. Selbstverständlich können aber auch hoch wärmeleitfähige Träger oder Matrixen des Konversionselements auch mittels einer geeigneten Einrichtung bewegt werden, um die Wärmebelastung weiter zu reduzieren oder allgemein einer Degradation vorzubeugen.

In einer besonders bevorzugten Ausführungsform ist das Konversionsmedium austauschbar. So kann es bei einem defekten Konversionsmedium gegen ein funktionstüchtiges Konversionsmedium oder durch ein Konversionsmedium das in einen anderen Spektralbereich konvertiert, ausgetauscht werden.

Es ist weiterhin vorteilhaft, wenn das Konversionsmedium so ausgebildet ist, dass auf der dem Laser zugewandten Seite für Wellenlängen, in die das Konversionsmaterial unter Anregung mit dem Laserlicht emittiert, also größeren Wellenlängen als die des Laserlichts, verspiegelt ist, um die Lichtmischung nicht nachteilig zu beeinflussen und die Effizienz zu steigern. Somit lässt sich erreichen, dass das auch in Rückrichtung abgestrahlte konvertierte Licht nicht verloren geht. Durch die Verspiegelung wird es wieder in die Vorwärtsrichtung reflektiert und steht so wieder für die Beleuchtung zur Verfügung.

Es ist besonders vorteilhaft wenn die Konversionsscheibe selbst kühlend ausgebildet ist. Dies kann beispielsweise über ein Flügelrad auf der Drehachse des Phosphorträgers (Radiallüfter) geschehen. Durch die Rotation wird so ein Luftstrom erzeugt, der die Wärme an die Umgebung abführt. Es sind aber auch andere Varianten denkbar.

In einer ganz besonders bevorzugten Ausführungsform ist die Einrichtung zur Weißlichterzeugung eingerichtet, in einen Lichtleiter, wie insbesondere eine Faser und/oder ein Faserbündel einzukoppeln, oder der Lichtleiter ist Bestandteil der Einrichtung zur Weißlichterzeugung. Dadurch kann die zur Verfügung stehende Lichtleistung auf eine Vielzahl an sekundären Lichtquellen aufgeteilt werden.

In einer weiteren besonders bevorzugten Ausführungsform ist die Einrichtung zur Weißlichterzeugung eingerichtet, unterschiedliche Farben durch Farb- oder Farbtemperaturwechsel zu erzeugen.

Der Farbwechsel kann dabei besonders vorteilhaft durch Ansteuerung verschiedener Spuren auf dem Konversionsmedium erzeugt werden. Diese können sich beispielsweise in unterschiedlichen axialen Abständen von der Konversionsscheibe befinden. Es sind aber auch andere Konfigurationen, beispielsweise Streifen bei einem oszillierenden Konversionsmedium, denkbar.

In einer weiteren Ausführungsform kann der Farbwechsel auch durch Überlagerung mit dem Licht einer LED die im ultravioletten und/oder roten Spektralbereich emittiert, erfolgen.

Diese Überlagerung kann besonders vorteilhaft dichroitisch oder durch Mischung erzeugt werden.

Die Erfindung wird nachfolgend anhand von Ausführungsbeispielen und unter Bezugnahme auf die beigeschlossenen Zeichnungen näher erläutert. Dabei verweisen gleiche Bezugszeichen auf gleiche oder entsprechende Elemente.

Es zeigen:
Fig. la eine Gesamtansicht einer Weißlichtquelle, nach dem Stand der Technik.
Fig. 1b eine Gesamtansicht der erfindungsgemäßen Weißlichtquelle.
Fig. 1c eine Weiterbildung der in Fig. 1b gezeigten Weißlichtquelle.
Fig. 2 schematisch, wie aus Mischung der direkt durchgelassenen blauen Strahlung und der konvertierten gelblichen Strahlung weißes Licht entsteht.
Fig. 3 beispielhaft eine Ausführungsform der erfindungsgemäßen Weißlichtquelle mit rotierendem Konversionsmaterial.
Fig. 4 beispielhaft eine weitere Ausführungsform der erfindungsgemäßen laserbasierte Weißlichtquelle zur Einkopplung in ein Faserbündel.
Fig. 5 Details einer laserbasierten Weißlichtquelle.
Fig. 6 eine weitere Ausführungsform der Erfindung, bei welcher das konvertierte Licht im Konversionsmedium zur Seite des einfallenden Laserstrahls zurückreflektiert wird.
Fig. 7 eine Variante der in Fig. 6 gezeigten Ausführungsform.

Fig. la zeigt eine Gesamtansicht einer Weißlichtquelle, nach dem Stand der Technik. Dabei wird von einer LED-Lichtquelle 10' monochromatisches Licht 20' auf ein Konversionsmedium 40' gestrahlt. Durch Streuung wird das monochromatische Licht in ein Strahlbündel 60' Lichts anderer Wellenlänge konvertiert 21'. Aufgrund der Streuung wird die Etendue der Lichtquelle 10' weiter vergrößert (in der Fig. la durch eine große Fläche und eine größer werdende Numerische Apertur gekennzeichnet). Es ist direkt ersichtlich, dass ein nachfolgendes optisches System hohe Güteanforderungen erfüllen müsste, um alles Licht dieser Lichtquelle ohne Einbußen in Strahlqualität wieder einzufangen und weiterzuleiten. Wenn die Etendue zu groß geworden ist, hilft auch ein gutes optisches System nicht mehr, um das Licht verlustarm in eine Faserbündel mit kleinerer Etendue zu koppeln.

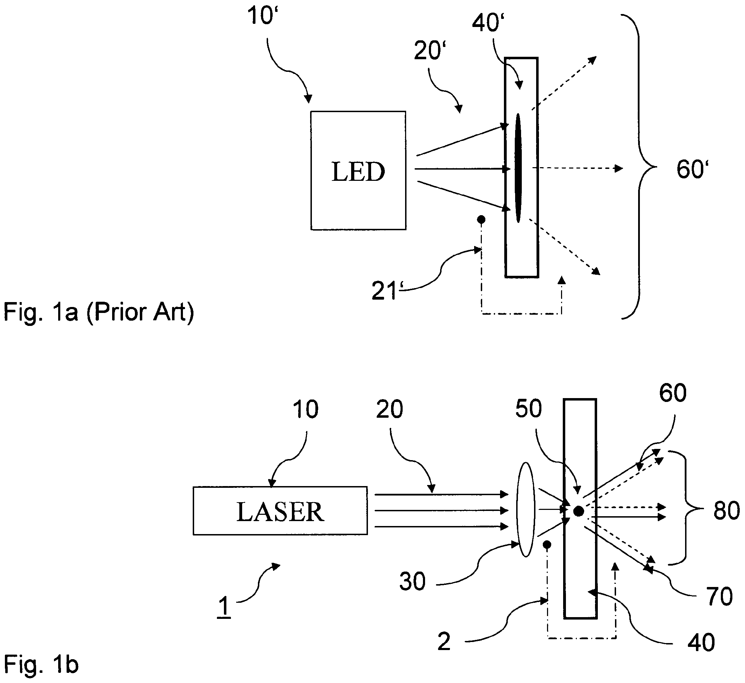

In Fig. 1b ist die erfindungsgemäße Weißlichtquelle 1 dargestellt. Dabei wird von der Laser-Lichtquelle 10 monochromatisches blaues Licht 20 über eine Optik, beziehungsweise ein optisches System 30 auf ein Konversionsmedium 40 in einen Fokus 50 fokussiert und in ein Lichtbündel 60 gelblichen Lichtes konvertiert. Zusammen mit der anteiligen direkt durchgelassenen blauen Strahlung 70 entsteht weißes Licht 80 mit geringer Etendue (die konvertierte Strahlung 60 wurde dabei in Fig. 1b gestrichelt überlagert eingezeichnet). Im Vergleich zu Fig. 1b ist zu erkennen, dass die Einkopplung in eine Faser, ein Faserbündel oder allgemein ein optisches System deutlich vereinfacht ist.

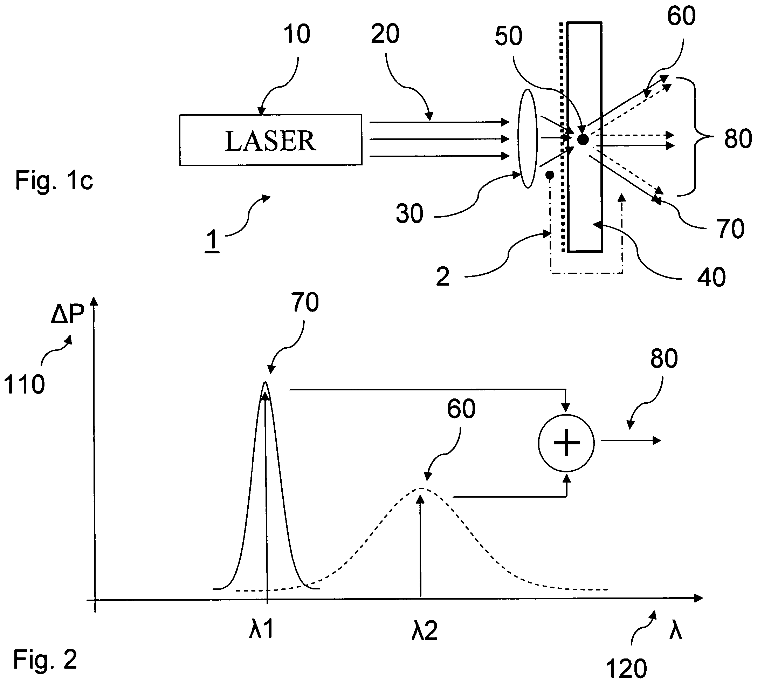

Fig. 1c zeigt eine Variante oder Weiterbildung der in Fig. 1b dargestellten Ausführungsform. Bei diesem in Fig. 1c gezeigten Beispiel ist das Konversionsmedium 40 für Wellenlängen größer als die Laserwellenlänge auf der dem Laser 10 zugewandten Seite verspiegelt. Dazu ist auf dieser Seite auf dem Konversionsmedium 40 eine dielektrische Reflexionsschicht 5 aufgebracht, welche das Licht des Lasers 10 hindurchlässt, das konvertierte Licht der längeren Wellenlänge hingegen reflektiert. Damit wird das konvertierte Licht, welches in Richtung auf den Laser 10 emittiert wird, zurückreflektiert, so dass es auf der der dielektrischen Reflexionsschicht 5 gegenüberliegenden Seite des Konversionsmediums austritt.

In Fig. 2 ist nochmals schematisch gezeigt, wie durch Farbmischung weißliches Licht erzeugt werden kann. Dazu ist die Leistung (110) über der Wellenlänge (120) aufgetragen. Der direkt durchgelassene Teil der monochromatischen blauen Laserstrahlung (70) mischt sich mit dem vom Konversionsmedium (40) in den gelben Spektralbereich konvertierten Anteil (60), in Fig. 2 ebenfalls gestrichelt eingezeichnet, zu weißlichem Licht (80). Um aus blauer Laserstrahlung gelbes Licht für die Mischung zu weißlichem Licht zu erzeugen, sind beispielsweise Leuchtstoffe geeignet, wie sie auch in Weißlicht-LEDs eingesetzt werden. Ein Beispiel eines solchen Leuchtstoffs ist Cer-dotierter Yttrium-Aluminium-Granat.

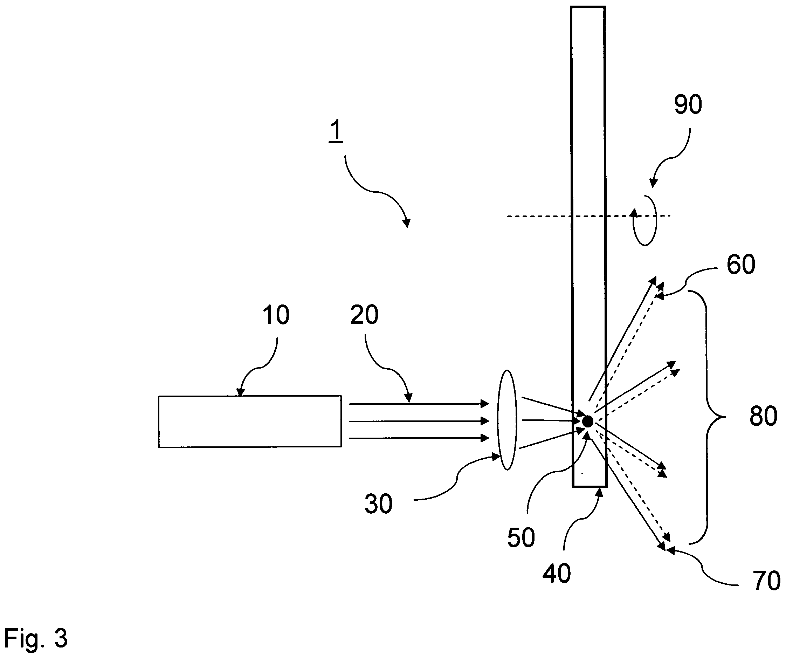

In Fig. 3 ist eine Ausführungsform der erfindungsgemäßen Weißlichtquelle (1) dargestellt. Die Funktionsweise ist dabei weitestgehend identisch zu Fig. 1b, nur dass hier das Konversionsmedium (40) um eine Achse 90 drehbar gelagert ist und mittels einer Einrichtung zur Bewegung des Konversionsmediums rotiert. Dies vermindert bzw. vermeidet die thermischen Probleme durch die Fokussierung bzw. die hohe Leuchtdichte im Fokus. Gleichzeitig wird der Speckle des blauen Lichtes reduziert. Bei der konvertierten gelblichen Strahlung 60 tritt hingegen kein Speckle auf, so dass specklefreies weißliches Licht entsteht.

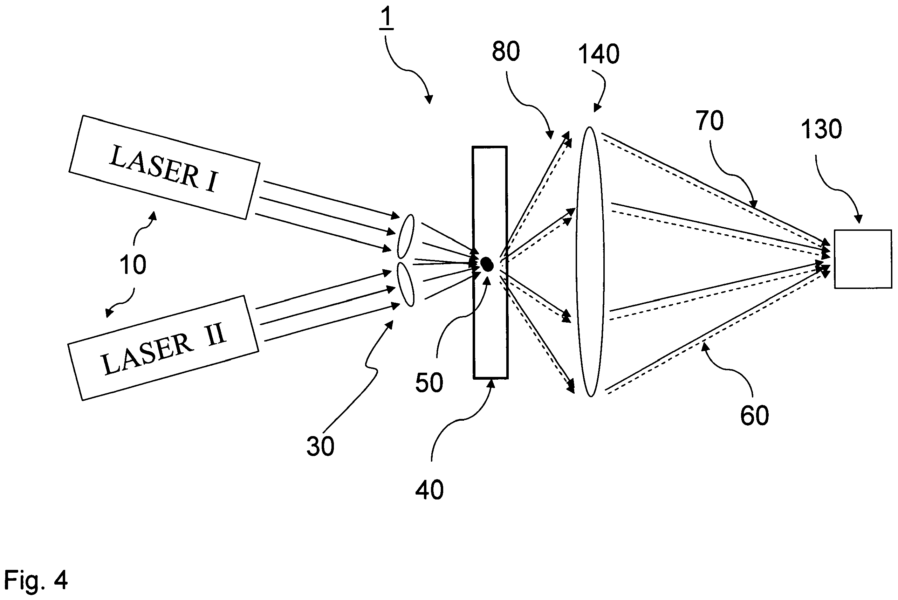

In Fig. 4 zeigt beispielhaft eine weitere Ausführungsform der erfindungsgemäßen Weißlichtquelle 1. Dabei wird das erzeugt weißliche Licht 80 mittels eines optischen Systems 140 in ein Faserbündel (130) eingekoppelt. Im Gegensatz zu Fig. 1b bzw. Fig. 3 werden hier zwei monochromatische Laserlichtquellen 10 zur weiteren Leuchtdichtesteigerung eingesetzt. Auch bei den anderen oben beschriebenen Ausführungsformen der Erfindung ist vorzugsweise ein optisches System 140 vorgesehen, um das aus dem Konversionsmedium 40 austretende Licht zu kollimieren. Allgemein, ohne Beschränkung auf die speziellen, in den Figuren dargestellten Ausführungsformen der Erfindung ist daher in Weiterbildung der Erfindung eine Optik, beziehungsweise ein optisches System 140 vorgesehen, welche das konvertierte Licht kollimiert. Als Kollimation wird dabei im Sinne der Erfindung allgemeiner eine Reduktion des Öffnungswinkels des aus dem Konversionsmedium 40 austretenden Lichts verstanden. Demgemäß stellt das optische System 140 eine in Lichtausbreitungsrichtung dem Konversionsmedium nachgeschaltete Optik dar, welche den Öffnungswinkel des vom Fokus ausgehenden, konvertierten Lichts reduziert. Vorzugsweise richtet dieses optische System das kollimierte Licht auf einen Lichtleiter, wie insbesondere das Faserende einer lichtleitenden Faser oder eines lichtleitenden Faserbündels.

Das Konversionsmedium 40 ist, wie auch anhand der bisherigen Figuren dargestellt, vorzugsweise als dünne Schicht oder Platte ausgebildet. Insbesondere ist es für den Zweck der Erfindung, die Étendue möglichst wenig zu vergrößern, allgemein günstig, die Dicke des Konversionsmediums 40 in der gleichen Größenordnung zu wählen, wie die Ausdehnung des vom optischen System 30 erzeugten Fokus. Allgemein, ohne Beschränkung auf die in den Figuren dargestellten Ausführungsformen der Erfindung ist dazu in Weiterbildung der Erfindung vorgesehen, dass das Konversionsmedium eine Dicke von kleiner als 0,3 Millimetern, vorzugsweise im Bereich bis 0,2 Millimetern aufweist.

Insbesondere wird bevorzugt, dass die Dicke des Konversionsmediums und das optische System 30 so ausgelegt sind, dass die Dicke des Konversionsmediums gemessen senkrecht zu dessen Oberfläche höchstens einen Faktor 3 größer ist, als die Querabmessung des Fokus. Im Falle eines runden Fokus 50 stellt die Querabmessung den Durchmesser des Fokus dar. Geringe Schichtdicken des Konversionsmediums 40 sind von Vorteil, um möglichst wenig einfallendes blaues und/oder ultraviolettes Licht des Lasers außerhalb des Bereichs des eigentlichen Fokus 50 zu konvertieren. Dies würde zu einer räumlichen Vergrößerung des Bereichs führen, in welchem konvertiertes Licht erzeugt wird.

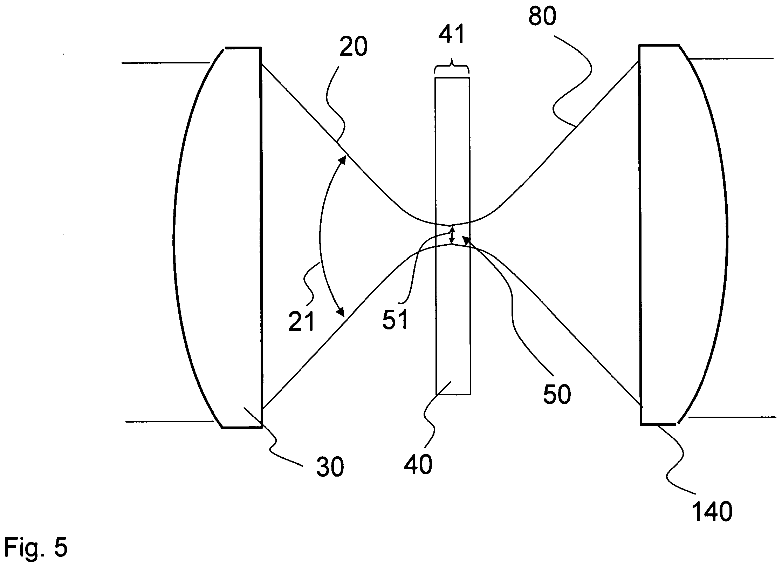

Fig. 5 zeigt dazu als Beispiel eine Darstellung des Fokus 50 im Konversionsmedium. Der Fokus 50 des blauen Lichts 20, der mit dem optischen System 30 erzeugt wird, weist in diesem Beispiel einen Durchmesser 51 auf, der etwa halb so groß ist, wie die Dicke 41 des Konversionsmediums 40, gemessen senkrecht zur Oberfläche, bei diesem Beispiel also auch gemessen in Lichteinfallsrichtung. Als Querabmessung, oder spezieller bei einem radialsymmetrischen Strahl als Durchmesser des Fokus 50 wird die Abmessung des Strahlquerschnitts verstanden, innerhalb dessen die Intensität auf die Hälfte des Maximalwerts abfällt. Mit anderen Worten wird als Querabmessung des Fokus dessen Halbwertsbreite verstanden. Bei Einsatz mehrerer auf einen Punkt im Konversionsmedium 40 fokussierter Laser ergibt sich entsprechend die Halbwertsbreite aus der Intensitätsverteilung der überlagerten Intensitäten der einzelnen Laser.

Um einen kleinen Durchmesser 51 des Fokus 50 zu erzielen, wird in Weiterbildung der Erfindung, wie oben beschrieben, auch ein großer Öffnungswinkel 21 des einfallenden monochromatischen blauen Lichts 20 angestrebt. Entsprechend wird ein optisches System 30 verwendet, welches eine hohe numerische Apertur aufweist. Vorzugsweise beträgt die numerische Apertur mindestens 0.6, was einem Öffnungswinkel von über 73° entspricht, wenn der einfallende blaue Laserstrahl ein Parallelstrahl ist. Bei dem in Fig. 5 gezeigten Beispiel beträgt der durch das optische System 30 erzielte Öffnungswinkel 21 sogar über 90°. Besonders bevorzugt wird eine numerische Apertur von größer 0.8, entsprechend einem Öffnungswinkel von mehr als 106°.

Bei den vorstehend beschriebenen Ausführungsbeispielen wird das Laserlicht auf einer Seite des Konversionsmediums eingestrahlt und auf der gegenüberliegenden Seite austretendes Laserlicht und konvertiertes Licht mittels eines optischen Systems 140 aufgefangen.

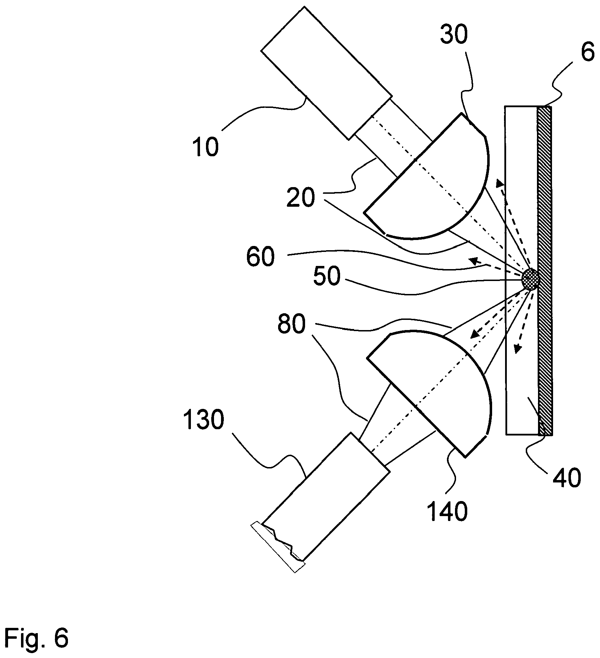

Es ist jedoch auch möglich, die Einrichtung als reflektierende Anordnung aufzubauen. Dazu ist allgemein, ohne Beschränkung auf die Ausführungsbeispiele in Weiterbildung der Erfindung vorgesehen, dass das optische System 30 und die dem Konversionsmedium 40 in Lichtausbreitungsrichtung nachgeschaltete Optik 140 auf der gleichen Seite bezüglich des Konversionsmediums 40 angeordnet sind. Auf der gegenüberliegenden Seite des Konversionsmediums 40 ist eine Reflexionseinrichtung angeordnet, welche das Licht der Lichtquelle 10 und das im Konversionsmedium 40 konvertierte Licht durch das Konversionsmedium 40 hindurch zurückreflektiert. Das zurückreflektierte und aus dem Konversionsmedium 40 austretende Licht wird dann von der Optik 140 aufgefangen und beispielsweise in einen Lichtleiter eingekoppelt. Ein Beispiel einer solchen Einrichtung zur Weißlichterzeugung 1 zeigt Fig. 6.

Bei der in Fig. 6 gezeigten Ausführungsform wird das blaue Laserlicht, beziehungsweise blaue monochromatische Licht 20 der Laserlichtquelle 10 unter schrägem Winkel auf die Oberfläche des Konversionsmediums 40 eingestrahlt und fokussiert, so dass der Fokus 50, wie bei den weiter oben beschriebenen Ausführungsformen im Konversionsmedium 40 liegt. Auf der Seite des Konversionsmediums 40, welche der Seite, auf welche das blaue Laserlicht 20 eingestrahlt wird, gegenüberliegt, ist als Reflexionseinrichtung eine Reflexionsschicht 6 angeordnet. Beispielsweise kann dazu diese Seite des Konversionsmediums mit einer metallisch reflektierenden Schicht oder einer breitbandig reflektierenden dielektrischen Beschichtung versehen werden. Das direkt durchgelassene Laserlicht 70, sowie das in Richtung der Reflexionsschicht abgestrahlte, im Konversionsmedium 40 erzeugte konvertierte Licht 60 werden an der Reflexionsschicht 6 reflektiert, so dass das aus der Mischung dieser Strahlung entstehende weiße Licht 80 das Konversionsmedium 40 auf der Seite verlässt, auf welche die blaue Laserstrahlung 20 eingestrahlt wird. Selbstverständlich wird dabei das konvertierte Licht 60 in den gesamten, an die laserseitige Oberfläche des Konversionsmediums angrenzenden Halbraum abgestrahlt.

Die dem Konversionsmedium 40 in Lichtausbreitungs-, beziehungsweise Lichteinstrahlrichtung nachgeschaltete Optik 140 ist folglich auf der gleichen Seite des Konversionsmediums 40, wie das optische System 30 angeordnet. Ähnlich zu dem in Fig. 4 gezeigten Beispiel wird durch die Optik 140 der Öffnungswinkel des weißen Lichts 80 reduziert, so dass dieser an die numerische Apertur eines Lichtleiter, wie beispielsweise ein Faserbündel 130 angepasst und in diesen eingekoppelt wird. Bei dem dargestellten Beispiel ist ebenso wie das optische System 30 auch die Optik 140 schräg zur Oberfläche des Konversionsmediums 40 angeordnet.

Eine reflektive Anordnung, wie sie das Beispiel der Fig. 6 zeigt, ermöglicht es, das Konversionsmedium 40 mit einer rückseitig mit einer Kühleinrichtung zu verbinden, um so eine bessere Kühlung zu erzielen.

Ein transmissives System, wie es die Fig. 1b, 1c, 3 und 4 zeigen, ist in dem Sinne einfacher, dass es durch richtige Einstellung der Transmission den vorgesehenen Anteil an blauem Licht unkonvertiert durchlässt, um weisses Licht zu erzeugen. Diese Feinabstimmung kann aber gegebenenfalls schwierig sein, weshalb ein reflektives System trotz seines zunächst komplexer erscheinenden Aufbaus einfacher zu beherrschen sein kann.

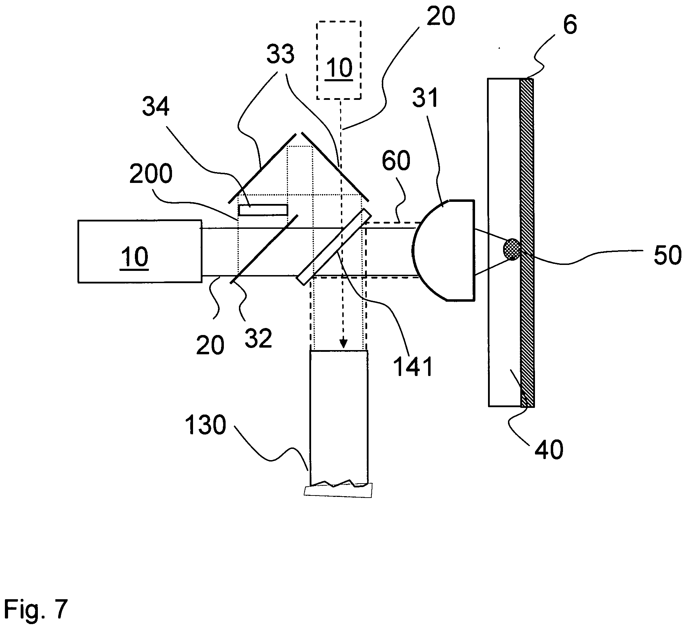

Fig. 7 zeigt eine Variante des in Fig. 6 dargestellten Ausführungsbeispiels. Bei dieser Variante ist eine Linse 31 vorgesehen, welche sowohl das optische System 30, als auch das optische System 140, oder zumindest einen Bestandteil dieser optischen Systeme bildet. Allgemein, ohne Beschränkung auf das spezielle dargestellte Ausführungsbeispiel ist gemäß einer Weiterbildung der Erfindung vorgesehen, dass das optische System 30 und die dem Konversionsmedium 40 in Lichtausbreitungsrichtung nachgeschaltete Optik 140 auf der gleichen Seite bezüglich des Konversionsmediums 40 angeordnet sind, wobei auf der gegenüberliegenden Seite des Konversionsmediums eine Reflexionseinrichtung angeordnet ist, welche das Licht der Lichtquelle 10 und das im Konversionsmedium konvertierte Licht durch das Konversionsmedium 40 hindurch zurückreflektiert, wobei das optische System 30 und die dem Konversionsmedium 40 in Lichtausbreitungsrichtung des Lasers 10 nachgeschaltete Optik 140 ein gemeinsames, fokussierendes optisches Element, vorzugsweise eine Linse 31 aufweisen, deren optische Achse vorzugsweise senkrecht zur der der Linse 31 zugewandten Oberfläche des Konversionsmediums 40 orientiert ist. Anstelle einer Linse 31 wäre beispielsweise auch ein Hohlspiegel denkbar.

Die optische Achse der Linse 31, also auch der optischen Systeme 30, 140 verläuft hier senkrecht zur Oberfläche des Konversionsmediums 40. Dies ermöglicht die Verwendung einer Linse 31 mit kurzer Brennweite und entsprechend hoher numerischer Apertur der optischen Systeme 30, 140.
Das im von der Linse 31 im Fokus 50 erzeugte konvertierte Licht 60 wird wie bei der in Fig. 6 dargestellten Ausführungsform teilweise in Richtung auf die Linse 31 ausgestrahlt, teilweise an der Reflexionsschicht 6 reflektiert und damit in Richtung auf die Linse 31 gerichtet. Die Linse 31 erzeugt aus dem konvertierten Licht 31 dann einen antiparallel zum einfallenden Laserlicht 20 verlaufenden Lichtstrahl konvertierten Lichts. Dieser Lichtstrahl wird mit einem dichroitischen Spiegel 141 als Bestandteil des optischen Systems 140 umgelenkt, so dass es in einen Lichtleiter, beispielsweise wieder ein Faserbündel 130 eingekoppelt werden kann. Der dichroitische Spiegel 141 ist so ausgebildet, dass dieser zwar die konvertierte Strahlung reflektiert, das Laserlicht 20 jedoch durchlässt.

Zur Erzeugung weißen Lichts bestehen nun verschiedene Möglichkeiten. Eine Möglichkeit besteht darin, das Konversionsmedium 40 so auszuwählen, dass das konvertierte Licht weiß ist. Dies ist insbesondere dann leicht möglich, wenn ein Laser 10 verwendet wird, der ultraviolette Strahlung emittiert, so dass im Konversionsmedium blaues Licht als Bestandteil der konvertierten Strahlung 60 erzeugt und am dichroitischen Spiegel 141 reflektiert wird. Der Spiegel 141 ist dann so ausgebildet, dass er das ultraviolette Laserlicht 20 durchlässt, blaues Licht aber reflektiert.

Eine weitere Möglichkeit ist, einen weiteren Laser oder eine blaue Lichtquelle, beipielsweise eine blau emittierende Leuchtdiode einzusetzen und deren Licht separat in den Lichtleiter einzukoppeln, um einen BlauAnteil im weissen Licht zu erhalten. Ein geeignet angeordneter weiterer Laser 10 und dessen Lichtstrahl 20 sind in gestrichelten Linien in Fig. 7 angedeutet. Diese Möglichkeit hat den Vorteil, über die Einstellung der Intensität der zusätzlichen Lichtquelle und damit des Blauanteils in einfacher Weise die Farbe oder Farbtemperatur des weißen Lichts verändern zu können.

Noch eine Möglichkeit besteht darin, einen Strahlteiler 32 zu verwenden, welcher einen Teil des Laserlichts 20 umlenkt und so einen Teilstrahl 200 erzeugt. Dieser Anteil des Laserlichts kann dann über Spiegel 33 oder auch ein geeignetes Prisma in eine kolinear zum am dichroitischen Spiegel 141 reflektierten konvertierten Licht 60 verlaufende Richtung umgelenkt und so in den Lichtleiter eingekoppelt werden. Auch hier kann die Farbe oder Farbtemperatur verändert werden, indem die Intensität des kolinearen Teilstrahls des Lasers 10 geändert wird. Dies kann beispielsweise durch Verstellung der Spiegel 33 oder des Strahlteilers erfolgen, so dass ein einstellbarer Anteil der herausgeteilten Laserstrahl-Intensität am Lichtleiter 130 vorbeigelenkt wird. Ebenso kann auch ein einstellbares optisches Dämpfungselement, beispielsweise ein Graukeil oder ein gegenüber der Polarisationsrichtung des Lasers 10 verstimmbarer Polarisator 34 im optischen Pfad des Teilstrahls 200 angeordnet werden.

### Bezugszeichenliste:

- 1: Weißlichtquelle
- 5: dielektrische Reflexionsschicht
- 6: Reflexionsschicht
- 10: Laser-Lichtquelle 10' LED- Lichtquelle
- 20: monochromatisches blaues Licht
- 21: Öffnungswinkel
- 20': monochromatisches Licht
- 21': Konversionsschritt
- 30, 140: optisches System
- 31: Linse
- 32: Strahlteiler
- 33: Spiegel
- 34: Polarisator
- 40: Konversionsmedium
- 41: Dicke von 40
- 50: Fokus
- 51: Durchmesser von 50
- 60: konvertierte Strahlung
- 60': Strahlbündel anderer Wellenlänge
- 70: direkt durchgelassene blaue Strahlung
- 80: weißes Licht
- 130: Faserbündel
- 141: dichroitischer Spiegel
- 200: Teilstrahl von 20

## Patentansprüche

1. Einrichtung zur Weißlichterzeugung (1) umfassend
- zumindest eine Lichtquelle (10)
- zumindest ein Konversionsmedium (40) in Form eines durch Fluoreszenz konvertierenden Stoffes, sowie
- eine dem Konversionsmedium in Lichtausbreitungsrichtung nachgeschaltete Optik (140), wobei die zumindest eine Lichtquelle (10) im blauen und/oder ultravioletten Spektralbereich emittiert und das Licht der zumindest einen Lichtquelle durch einen Laser erzeugt wird und das Licht der zumindest einen Lichtquelle (10) durch ein optisches System (30) auf das Konversionsmedium (40) fokussiert wird, so dass der Fokus des Lichts im Konversionsmedium (40) liegt und das Konversionsmedium (40) das eingestrahlte Licht zumindest anteilig in einen anderen Spektralbereich (60) konvertiert, wobei die nachgeschaltete Optik (140) den Öffnungswinkel des vom Fokus ausgehenden konvertierten Lichts reduziert und wobei das optische System (30) und die dem Konversionsmedium (40) in Lichtausbreitungsrichtung nachgeschaltete Optik (140) auf der gleichen Seite bezüglich des Konversionsmediums (40) angeordnet sind und wobei auf der gegenüberliegenden Seite des Konversionsmediums eine Reflexionseinrichtung angeordnet ist, welche das Licht der Lichtquelle (10) und das im Konversionsmedium konvertierte Licht durch das Konversionsmedium (40) hindurch zurückreflektiert,
**dadurch gekennzeichnet, dass**
eine Linse (31) einen fokussierenden Bestandteil sowohl des optischen Systems (30) als auch der dem Konversionsmedium (40) in Lichtausbreitungsrichtung nachgeschalteten Optik (140) bildet und dass eine optische Achse der Linse (31) als gemeinsames, fokussierendes optisches Element senkrecht zur der der Linse (31) zugewandten Oberfläche des Konversionsmediums (40) orientiert ist.

2. Einrichtung nach Anspruch 1, **dadurch gekennzeichnet, dass** eine Dicke (41) des Konversionsmediums (40) gemessen senkrecht zu dessen Oberfläche höchstens einen Faktor 3 größer ist als die Querabmessung (51) des Fokus (50).

3. Einrichtung nach einem der vorstehenden Ansprüche, **gekennzeichnet durch** ein entlang des optischen Pfades vor dem Konversionsmedium (40) angeordnetes Strahlformungselement zur Änderung der Intensitätsverteilung des Lichtstrahls der zumindest einen Lichtquelle (10).

4. Einrichtung nach einem der vorstehenden Ansprüche, bei welcher das optische System (30) refraktive, reflektive, diffraktive optische Elemente, oder eine Kombination dieser umfasst.

5. Einrichtung nach einem der vorstehenden Ansprüche, bei welcher die numerische Apertur des optischen Systems (30) größer als 0.45, bevorzugt größer als 0.6, oder ganz besonders bevorzugt größer als 0.8 ist.

6. Einrichtung nach einem der vorstehenden Ansprüche, bei welcher der konvertierte Spektralbereich (60) im gelben Spektralbereich mit Schwerpunkt im Bereich von 550 nm und 620 nm mit einer Halbwertsbreite von bevorzugt größer als 50 nm, besonders bevorzugt größer als 100 nm und ganz besonders bevorzugt größer als 150 nm, liegt.

7. Einrichtung nach einem der vorstehenden Ansprüche, weiter umfassend eine Einrichtung zur Bewegung des Konversionsmediums (40) relativ zum Lichtstrahl der Lichtquelle (10).

8. Einrichtung nach einem der vorstehenden Ansprüche, bei welcher das Konversionsmedium (40) für Wellenlängen größer als die Laserwellenlänge auf der dem Laser zugewandten Seite verspiegelt ist.

9. Einrichtung nach einem der vorstehenden Ansprüche, **gekennzeichnet durch** eine selbstkühlende Konversionsscheibe (40).

10. Einrichtung nach einem der vorstehenden Ansprüche, bei welcher die Einrichtung zur Weißlichterzeugung (1) eingerichtet ist, weißes Licht in eine Faser und/oder in ein Faserbündel (130) einzukoppeln.

11. Einrichtung nach einem der vorstehenden Ansprüche, bei welcher die Einrichtung zur Weißlichterzeugung (1) eingerichtet ist, Farbwechsel zu erzeugen, die durch Ansteuerung verschiedener Spuren auf dem Konversionsmedium (40) erzeugt werden.

## Claims

1. A device for generating white light (1), comprising
- at least one light source (10);
- at least one conversion medium (40) in the form of a substance converting through fluorescence; and
- an optics (140) arranged downstream of the conversion medium in the direction of light propagation, wherein said at least one light source (10) emits in the blue and/or ultraviolet spectral ranges and the light of the at least one light source is generated by a laser and the light of the at least one light source (10) is focused onto the conversion medium (40) by an optical system (30) such that the focus of the light is located in the conversion medium (40) and the conversion medium (40) converts the incident light at least partially into a different spectral range (60); wherein the downstream optics (140) reduces the opening angle of the converted light emanating from the focus and wherein the optical system (30) and the optics (140) downstream of the conversion medium (40) in the direction of light propagation are arranged on the same side with respect to the conversion medium (40); and wherein a reflecting means is arranged on the opposite side of the conversion medium, which reflects the light of the light source (10) and the light converted in the conversion medium back through the conversion medium (40);
**characterized in that**
a lens (31) represents a focusing component of both the optical system (30) and of the optics (140) downstream of the conversion medium (40) in the light propagation direction; and that an optical axis of the lens (31) as the shared focusing optical element is oriented perpendicular to the surface of the conversion medium (40) facing the lens (31).

2. The device according to claim 1, **characterized in that** a thickness (41) of the conversion medium (40) as measured perpendicular to the surface thereof is larger than the transverse dimension (51) of the focus (50) by not more than a factor of 3.

3. The device according to any one of the preceding claims, **characterized by** a beam shaping element arranged in the optical path upstream of the conversion medium (40), for altering the intensity distribution of the light beam from the at least one light source (10).

4. The device according to any one of the preceding claims, wherein the optical system (30) comprises refractive, reflective, diffractive optical elements, or a combination thereof.

5. The device according to any one of the preceding claims, wherein the numerical aperture of the optical system (30) is greater than 0.45, preferably greater than 0.6, or most preferably greater than 0.8.

6. The device according to any one of the preceding claims, wherein the converted spectral range (60) is within the yellow spectral region having its centre in a range from 550 nm to 620 nm, with a full width at half maximum of preferably greater than 50 nm, more preferably greater than 100 nm, and most preferably greater than 150 nm.

7. The device according to any one of the preceding claims, further comprising a means for moving the conversion medium (40) relative to the light beam of the light source (10).

8. The device according to any one of the preceding claims, wherein the conversion medium (40) is mirrored for wavelengths greater than the laser wavelength on the side facing the laser.

9. The device according to any one of the preceding claims, **characterized by** a self-cooling conversion plate (40).

10. The device according to any one of the preceding claims, wherein the device for generating white light (1) is adapted to inject white light into a fibre and/or into a fibre bundle (130).

11. The device according to any one of the preceding claims, wherein the device for generating white light (1) is adapted to produce colour changes which are generated by focusing to different tracks on the conversion medium (40).

## Revendications

1. Dispositif de génération de lumière blanche (1) comprenant
- au moins une source de lumière (10)
- au moins un milieu de conversion (40) sous la forme d'une substance de conversion par fluorescence, ainsi que
- une optique (140) montée en aval du milieu de conversion dans le sens de propagation de la lumière, dans lequel l'au moins une source de lumière (10) émet dans la plage spectrale bleue et/ou ultraviolette et la lumière d'au moins une source de lumière est générée par un laser et la lumière d'au moins une source de lumière (10) est focalisée par un système optique (30) sur le milieu de conversion (40) de sorte que le foyer de la lumière se trouve dans le milieu de conversion (40) et le milieu de conversion (40) convertisse la lumière irradiée au moins proportionnellement dans une autre plage spectrale (60), dans lequel l'optique (140) montée en aval réduit l'angle d'ouverture de la lumière convertie sortant du foyer et dans lequel le système optique (30) et l'optique (140) montée en aval du milieu de conversion (40) dans le sens de propagation de la lumière sont agencés sur le même côté par rapport au milieu de conversion (40) et dans lequel, sur le côté opposé du milieu de conversion, un dispositif de réflexion est agencé, lequel réfléchit la lumière de la source de lumière (10) et la lumière convertie dans le milieu de conversion à travers le milieu de conversion (40),
**caractérisé en ce que**
une lentille (31) forme un constituant de focalisation non seulement du système optique (30) mais aussi de l'optique (140) montée en aval du milieu de conversion (40) dans le sens de propagation de la lumière et qu'un axe optique de la lentille (31) est orienté comme élément optique de focalisation commun perpendiculairement à la surface tournée vers la lentille (31) du milieu de conversion (40).

2. Dispositif selon la revendication 1, **caractérisé en ce qu'**une épaisseur (41) du milieu de conversion (40) mesurée perpendiculairement à sa surface est plus grande au plus d'un facteur 3 que la dimension transversale (51) du foyer (50).

3. Dispositif selon l'une des revendications précédentes, **caractérisé par** un élément de formation de faisceau agencé le long du trajet optique avant le milieu de conversion (40) pour la modification de la répartition d'intensité du faisceau de lumière d'au moins une source de lumière (10).

4. Dispositif selon l'une des revendications précédentes, pour lequel le système optique (30) comporte des éléments optiques réfractifs, réflectifs, diffractifs, ou une combinaison de ceux-ci.

5. Dispositif selon l'une des revendications précédentes, pour lequel l'ouverture numérique du système optique (30) est supérieure à 0,45, de préférence supérieure à 0,6 ou de manière tout particulièrement préférée supérieure à 0,8.

6. Dispositif selon l'une des revendications précédentes, pour lequel la plage spectrale (60) convertie se trouve dans la plage spectrale jaune avec le centre de gravité dans la plage de 550 nm et 620 nm avec une largeur de valeur moyenne de préférence supérieure à 50 nm, de manière particulièrement préférée supérieure à 100 nm et de manière tout particulièrement préférée supérieure à 150 nm.

7. Dispositif selon l'une des revendications précédentes, comprenant en outre un dispositif de déplacement du milieu de conversion (40) par rapport au faisceau de lumière de la source de lumière (10).

8. Dispositif selon l'une des revendications précédentes, pour lequel le milieu de conversion (40) pour des longueurs d'onde supérieures à la longueur d'onde laser est rendu réfléchissant sur le côté tourné vers le laser.

9. Dispositif selon l'une des revendications précédentes, **caractérisé par** un disque de conversion (40) à refroidissement automatique.

10. Dispositif selon l'une des revendications précédentes, pour lequel le dispositif de génération de lumière blanche (1) est aménagé afin d'injecter de la lumière blanche dans une fibre et/ou dans un faisceau de fibres (130).

11. Dispositif selon l'une des revendications précédentes, pour lequel le dispositif de génération de lumière blanche (1) est aménagé afin de générer des changements de couleur qui sont générés par commande de pistes différentes sur le milieu de conversion (40).
